## Europäisches Patentamt

## European Patent Office

## Office européen des brevets

(11) Veröffentlichungsnummer: **0 154 110**
**B1**

## EUROPÄISCHE PATENTSCHRIFT

(45) Veröffentlichungstag der Patentschrift:
**13.01.88**

(21) Anmeldenummer: **84890039.5**

(22) Anmeldetag: **06.03.84**

(51) Int. Cl.⁴: **F 16 B 21/12, A 01 B 59/00**

(54) Klappstecker und Verfahren zu seiner Herstellung.

(43) Veröffentlichungstag der Anmeldung:
**11.09.85 Patentblatt 85/37**

(45) Bekanntmachung des Hinweises auf die Patenterteilung:
**13.01.88 Patentblatt 88/2**

(84) Benannte Vertragsstaaten:
**DE FR GB IT**

(56) Entgegenhaltungen:
**DE-B-2 341 253**
**DE-U-1 678 034**
**DK-C-126 518**
**FR-A-1 471 004**
**US-A-4 036 097**

**H.W. HALLER "Handbuch des Schmiedens" 1971, CARL-HÄNSER VERLAG, München; Seiten 157-159, 226**

(73) Patentinhaber: **Rübig, Paul, Johann- Strauss- Strasse 31P, A-4600 Wels (AT)**

(72) Erfinder: **Rübig, Paul, Johann- Strauss- Strasse 31P, A-4600 Wels (AT)**

(74) Vertreter: **Boeckmann, Peter, Dipl.- Ing., Patentanwälte Dipl.- Ing. Peter Boeckmann, Dipl.- Ing. Leo Brauneiss Strohgasse 10, A-1030 Wien (AT)**

EP 0 154 110 B1

## Description

Die Erfindung bezieht sich auf einen Klappstecker, der einen Schaft und einen im Kopf desselben schwenkbar gelagerten Federbügel aufweist, zu dessen Lagerung zwei Löcher oder zwei den Schaftkopf durchsetzende Löcher mit geschlossenem Umfang im Schaftkopf vorgesehen sind, deren Lochachsen in Richtung der Schaftachse und quer dazu gegeneinander versetzt sind, so daß der Mittenbereich des Federbügels elastisch gegen den Schaft gedrückt wird, wobei gegebenenfalls im Schaftkopf ein drittes Loch für die Aufnahme einer Sicherungskette vorgesehen ist, und wobei sich zumindest die Lochwände für die Löcher zur Aufnahme des Federbügels in Richtung zur Einstecköffnung für den Federbügel zu erweitern und diese Lochwände spanlos geformt sind. Weiters bezieht sich die Erfindung auf ein Verfahren zur Herstellung eines solchen Klappsteckers.

Zumeist wird der Schaft des Klappsteckers durch eine am Ende einer Welle oder Achse vorgesehene Bohrung hindurchgesteckt, so daß der Schaft des Klappsteckers die Achse bzw. Welle gegen Herausziehen bzw. Herausfallen aus einem Lager oder auf die Achse bzw. Welle aufgesteckte Maschinenteile gegen Abziehen sichert. Der die Achse bzw. Welle umgreifende Federbügel drückt elastisch gegen den Schaft und verhindert so, daß der Schaft des Klappsteckers unbeabsichtigt aus der Bohrung der Welle bzw. Achse herausgezogen werden bzw. bei Drehung der Welle aus dieser herausfallen kann. Zumeist ist mit dem Klappstecker auch eine Sicherungskette verbunden, wodurch vermieden wird, daß der Klappstecker im herausgenommenen Zustand verloren gehen kann.

Bei den meisten bekannten Konstruktionen sind die die Federbügelenden aufnehmenden Löcher des Klappsteckerkopfes von Bohrungen gebildet. Dies hat aber einerseits den Nachteil, daß, insbesondere in der Massenfertigung, die hiefür notwendigen Bohrvorgänge verhältnismäßig teuer sind. Anderseits besteht der Nachteil, daß die gebohrten Lochwände zylindrisch sind und die in solche Löcher eingesetzten Federbügelenden eine verhältnismäßig hohe Reibung haben. Da die elastische Andrückkraft, mit welcher die Federbügelmitte am dem Klappsteckerkopf entgegengesetzten Ende des Schaftes anliegt, um so geringer ist, je höher die Reibung der Federbügelenden in den sie aufnehmenden Löchern ist, kann es dazu kommen, daß die elastische Andrückung des Federbügels zu gering wird, um eine einwandfreie Sicherung gegen unbeabsichtigtes Abziehen bzw. Herausfallen des Klappsteckers zu bilden. Es muß ja auch berücksichtigt werden, daß Klappstecker häufig bei Maschinen verwendet werden, die unter Einwirkung von Staub bzw. Schmutz stehen, z. B. auf dem Landmaschinengebiet bei Traktoren zur Befestigung des Dreipunktgestänges, wodurch die erwähnte Reibung zwischen Federbügelende und Lochwand noch weiter vergrößert wird.

Es ist jedoch auch ein Klappstecker der eingangs geschilderten Art bekannt geworden (DE-B-2 341 253), welcher im Gesenk geschmiedet werden kann, so daß es möglich ist, seine Lochwände spanlos zu formen. Dadurch lassen sich aber die geschilderten Nachteile nur unvollkommen vermeiden. Zwar wird der Vorteil erzielt, daß mittels der spanlosen Formung der Lochwände der Klappstecker billiger herzustellen ist als wenn die Löcher gebohrt werden, was sich in der Massenproduktion vorteilhaft auf den Gesamtpreis des Klappsteckers auswirkt. Es tritt jedoch der Nachteil auf, daß die Federbügelenden bei der Montage des Klappsteckers versehentlich in jene Lochenden eingesteckt werden, die das verjüngte Ende des durchgehenden Loches bilden. Eine solche unrichtige Einsetzung des Federbügelendes hat zumeist eine wesentliche Verschlechterung der Reibungsverhältnisse zur Folge.

Die Erfindung setzt sich zum Aufgabe, diese Nachteile zu vermeiden und einen Klappstecker der eingangs geschilderten Art so zu verbessern, daß bei Beibehaltung der kostengünstigen spanlosen Formung der den Federbügel aufnehmenden Löcher die Reibung zwischen den Federbügelenden und den sie aufnehmenden Löchern wesentlich reduziert wird. Die Erfindung löst diese Aufgabe dadurch, daß zumindest eines der Löcher zur Aufnahme des Federbügels ein Sackloch ist und daß am Grunde dieses Sackloches ein in Richtung zum Lochrand vorstehender Vorsprung z. B. eine Spitze oder Bombierung, vorgesehen ist. Dadurch wird die Reibung des in dieses Loch eingesetzten Federbügelendes auf ein Minimum reduziert, da nur mehr eine punktförmige Berührung zwischen Federbügelende und Lochwand vorliegt. Für dieses Federbügelende ist es dann auch möglich, auf die bei durchgehenden Löchern übliche Abbiegung des Federbügels zu verzichten, die bisher vorgesehen wurde, um zu verhindern, daß der Klappsteckerschaft entlang der Federbügelachse gleitet. Ein weiterer Vorteil liegt darin, daß eine unrichtige Einsetzung des Federbügels in die ihn aufnehmenden Löcher nicht mehr stattfinden kann, auch wenn nur eines der Löcher als Sackloch ausgebildet ist.

Gemäß einer Variante löst die Erfindung die zuvor genannte Aufgabe dadurch, daß sich beide Endabschnitte zumindest eines der Löcher zur Aufnahme des Federbügels in Richtung zur Lochmündung erweitern, vorzugsweise konisch. Hiebei sind die Reibungsverhältnisse ebenfalls günstiger, als sich bei einem nur in der einen Richtung zur Einstecköffnung erweiternden Loch, insbesondere bei einer Schrägstellung des eingesetzten Federbügelendes in Bezug auf die Lochachse, wie sie im Betrieb zumeist vorkommt. Außerdem ist diese Konstruktion unabhängig davon, wie der Federbügel in die ihn

aufnehmenden Löcher eingesetzt wird.

Es spielt im Rahmen der Erfindung keine Rolle, wenn die Lochwand nicht so exakt verläuft, wie dies bei einem Bohrvorgang erzielt werden kann, da ja das Federbügelende ohnedies nur im wesentlichen linienförmig mit dieser Lochwandfläche in Berührung steht. Im allgemeinen ist ein konisch sich erweiternder Verlauf der das Federbügelende aufnehmenden Lochwand am günstigsten, jedoch kann gegebenenfalls auch eine davon abweichende, sich zum Lochrand erweiternde Lochwandform Anwendung finden, z. B. eine sich zum Lochrand trompetenförmig erweiternde Lochwand usw. Wenn der Klappstecker auch ein drittes Loch für die Sicherungskette aufweist, kann auch dieses Loch spanlos geformt werden, um die Vorteile der spanlosen Formung auch bei der Herstellung dieses Loches ausnutzen zu können. Im allgemeinen ist es jedoch nicht erforderlich, auch dieses Loch mit einer sich erweiternden Lochwand auszubilden, es sei denn, dies ist aus herstellungsmäßigen Gründen bei der spanlosen Formung vorteilhaft.

Die Konizität der Lochwand kann im Rahmen der Erfindung in Abhängigkeit von den vorliegenden Gegebenheiten in einem verhältnismäßig weiten Bereich schwanken. Im allgemeinen ist es ausreichend, wenn sich die Lochwände mit einem Konuswinkel von 1 bis 25°, vorzugsweise 3 bis 10° erweitern.

Das erfindungsgemäße Verfahren zur Herstellung eines erfindungsgemäßen Klappsteckers kennzeichnet sich dadurch, daß die sich erweiternden Lochwände und gegebenenfalls auch der Lochboden spanlos geformt werden, insbesondere durch Schmieden im Gesenk, Drücken, Prägen oder Gießen in einer Form unter Verwendung eines Dornes. Dadurch wird eine Verbilligung der Herstellung, insbesondere in der Nassenfertigung, gegenüber dem sonst zumeist üblichen Bohrvorgang zur Herstellung der Klappsteckerlöcher erzielt.

Bei Klappsteckern, die am Lochgrund einen in Richtung zum Lochrand vorstehenden Vorsprung haben, besteht eine vorteilhafte Weiterbildung des erfindungsgemäßen Verfahrens darin, daß die sich erweiternde Lochwand jedes Loches zusammen mit dem zum Lochrand vorstehenden Vorsprung in einem gemeinsamen Arbeitsgang spanlos geformt werden. Dies verbilligt die Herstellung wesentlich, da nur ein einziger spanloser Arbeitsgang erforderlich ist.

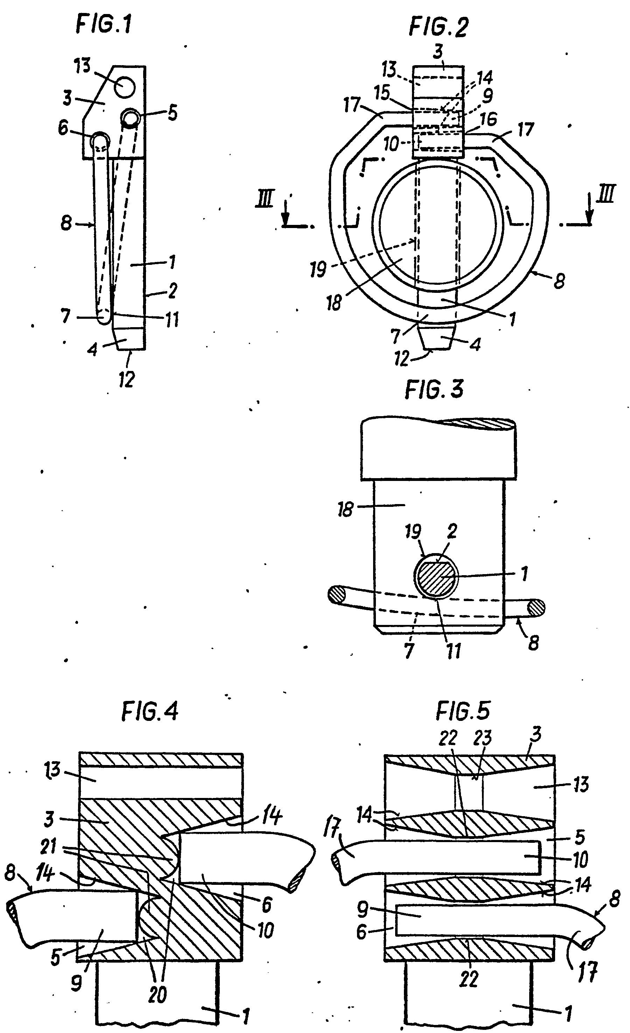

In der Zeichnung sind Ausführungsbeispiele erfindungsgemäßer Klappstecker schematisch dargestellt. Fig. 1 zeigt eine Seitenansicht eines Klappsteckers und Fig. 2 eine Stirnansicht desselben im aus einer Welle oder Achse montierten Zustand. Fig. 3 ist ein Schnitt nach der Linie III - III der Fig. 2. Fig. 4 zeigt einen Vertikalschnitt durch den Schaftkopf des Klappsteckers mit eingesetzten Federbügelenden in größerem Maßstab. Fig. 5 zeigt eine Ausführungsvariante zu Fig. 4.

Der Klappstecker nach den Fig. 1 bis 3 hat einen Schaft 1 in Form eines Bolzens, der an einer Seite mit einer Abflachung 2 (Fig. 3) versehen ist und an einem Ende einen verbreiterten Kopf 3 trägt, wogegen das andere Ende 4 kegelstumpfförmig ausgebildet ist. Im Kopf 3 sind zwei durchgehende Löcher 5, 6 vorgesehen, die einen geschlossenen Umfang aufweisen, d.h. ringsum vom Material des Kopfes 3 völlig umgeben sind. Die Achsen der Löcher 5, 6 sind relativ zueinander in Richtung der Achse des Schaftes 1 und quer dazu gegeneinander versetzt, so daß der Mittenbereich 7 eines Federbügels 8, dessen Enden 9, 10 in die Löcher 5 bzw. 6 eingesetzt sind, elastisch gegen den Schaft 1 gedrückt wird. Der Schaft 1 kann an jener Stelle 11 seines Umfanges, an welcher der Mittenbereich 7 das Federbügels 8 zur Anlage kommt, mit einer nicht dargestellten, von einer Nase begrenzten Rast versehen sein, in die dieser quer zur Schaftachse verlaufende Mittenbereich 7 des Federbügels 8 an der Nase vorbei einschnappen kann. Eine solche Rast kann gegebenenfalls auch an der Stirnfläche 12 des Schaftes 1 vorgesehen sein, wobei der Mittenbereich 7 des Federbügels 8 dann mit dieser Rast zusammenarbeitet

Ferner ist im Kopf 3 ein drittes Loch 13 angeordnet, das zur Aufnahme einer nicht dargestellten Sicherungskette dient und dessen Achse parallel zu den Achsen der Löcher 5, 6 verlaufen kann. Das Loch 13 ist im dargestellten Ausführungsbeispiel zylindrisch, wogegen die Löcher 5, 6 mit geringfügig konisch verlaufenden Lochwänden 14 ausgebildet sind, wobei sich diese Lochwände 14 in Richtung zur Einsteckóffnung 15 bzw. 16 für das jeweilige Ende 9 bzw. 10 des Federbügels 8 erweitern. Die Konizität dieser Lochwände beträgt vorzugsweise 5 bis 10°, kann jedoch in Sonderfällen zwischen 1 und 25° liegen. Dadurch wird die Reibung zwischen den Lochwänden 14 und den Enden 9 bzw. 10 des Federbügels 8 auf ein Minimum herabgesetzt.

Der Federbügel 8 ist mit Abbiegungen 17 versehen, um zu vermeiden, daß der Schaft 1 entlang der Achse des Federbügels 8 gleitet.

In den Fig. 2 und 3 ist der Klappstecker in montiertem Zustand auf einer Welle 18 oder einer Achse dargestellt. Der Schaft 1 des Klappsteckers durchsetzt hiebei eine Bohrung 19 der Welle 18 und der Federbügel 8 umgibt diese Welle 18. Dadurch kann der Klappstecker nicht unbeabsichtigt von der Welle 18 abgenommen werden bzw. herausfallen.

Bei der Ausführungsvariante nach Fig. 4 sind die die Enden 9 bzw. 10 des Federbügels 8 aufnehmenden Löcher 5 bzw. 6 nicht durchgehend, sondern als Sacklöcher ausgebildet, deren Konizität der Deutlichkeit halber übertrieben dargestellt ist. Jedes Sackloch hat an seinem Grund 20 einen sich in Richtung zum Lochrand, also zur Einstecköffnung 15 bzw. 16 vorstehenden Vorsprung 21, der als bombierte Fläche ausgebildet ist, so daß das Ende 9 bzw. 10 des Federbügels 8 im

wesentlichen nur punktförmig an diesem bombierten Vorsprung 21 anliegt. Dies ergibt eine weitere Reduktion der Reibung. Auf Abbiegungen des Federbügels 8 kann bei dieser Ausführungsform verzichtet werden, da die Federbügelenden 9 bzw. 10 ja nicht weiter als dargestellt in die Löcher 5 bzw. 6 eindringen können.

Bei der Ausführungsform nach Fig. 3 sind die drei Löcher 5, 6, 13 durchgehend. Jedes der Löcher 5, 6 zur Aufnahme des Federbügels 8 hat zwei den Lochrändern benachbarte Abschnitte, deren Lochwände 14 sich konisch zu den Lochrändern zu erweitern. Zwischen diesen konischen Abschnitten liegt ein zylindrischer Mittelabschnitt 22, dessen Durchmesser geringfügig größer ist als der Durchmesser des Drahtes, der den Federbügel 8 bildet und in ähnlicher Weise wie bei Fig. 2 mit zwei Abbiegungen 17 versehen ist. Bei dieser Ausführungsform kann der Federbügel 8 von beiden Seiten her in die Löcher 5, 6 eingesteckt werden.

Auch das Loch 13 hat zwei sich konisch zu den Lochrändern zu erweiternde Abschnitte und einen diese beiden Abschnitte verbindenden Mittelabschnitt 23.

Bei allen Ausführungsformen sind die konisch verlaufenden Wandpartien der Löcher 5, 6 und zweckmäßig auch die konisch verlaufenden Wandpartien des Loches 13 spanlos geformt, vorzugsweise in einem gemeinsamen Arbeitsgang. Diese spanlose Formung kann durch Schmieden im Gesenk, Drücken, Prägen oder Gießen in einer Form unter Verwendung eines Dornes in an sich bekannter Weise erfolgen. Bei diesem Arbeigsgang können auch die Vorsprünge 21 (Fig. 4) mitgeformt werden. Auch die zylindrischen Mittelabschnitte 22, 23 (Fig. 5) können hiebei spanlos mitgeformt werden, es ist jedoch auch möglich, die spanlose Formung nur auf die Herstellung der konisch verlaufenden Lochwände 14 zu beschränken und, z. B. durch Gesenkschmieden, Drücken oder Prägen, zunächst die konisch verlaufenden Lochwände 14 auf den beiden Seiten des Kopfes 3 auszubilden und anschließend den verbleibenden mittigen Steg zur Ausbildung der konisch verlaufenden Mittelabschnitte 22, 23 zu stanzen.

Wie bereits im Zusammenhang mit Fig. 2 erwähnt, ist es jedoch selbstverständlich möglich, die durchgehenden Löcher 5, 6 für die Aufnahme des Federbügels so auszubilden, daß sich die jeweilige Lochwand von einem Lochrand zum anderen konisch erweitert, so daß also der eine Lochrand die engste Stelle des Loches darstellt und der andere Lochrand die weiteste Stelle.

Der Vorteil durchgehender Löcher 5, 6 für den Federbügel 8 gegenüber Sacklöchern liegt darin, daß die Reibung des Federbügelendes am Sacklochboden entfällt. Dies ermöglicht es im Zusammenhang mit der konischen Ausführung der Löcher, die ebenfalls die Reibung vermindert, die Federkraft des Federbügels zu erhöhen bzw.

bei gleicher Federkraft einen geringeren Drahtdurchmesser des Federbügels 8 zu verwenden, was die Kosten für den Federbügel senkt.

Die im Zusammenhang mit Fig. 5 erwähnte Stanzung des im Bereich des Mittelabschnittes 22 bzw. 23 verbleibenden Steges kann selbstverständlich auch für einen im Bereich des Lochrandes nach einem spanlosen Arbeitsvorgang zur Herstellung einer konisch verlaufenden Lochwand verbleibenden Steg angewendet werden. Dieser Stanzvorgang ist zwar ein spanender Vorgang, hat aber auf die Ausbildung der sich in Richtung zur Einstecköffnung für den Federbügel erweiternden Lochwände keinen Einfluß.

## Patentansprüche

1. Klappstecker, der einen Schaft (1) und einen im Kopf (3) desselben schwenkbar gelagerten Federbügel (8) aufweist, zu dessen Lagerung zwei Löcher (5, 6) mit geschlossenem Umfang im Schaftkopf vorgesehen sind, deren Lochachsen in Richtung der Schaftachse und quer dazu gegeneinander versetzt sind, so daß der Mittenbereich (7) des Federbügels (8) elastisch gegen den Schaft gedrückt wird, wobei gegebenenfalls im Schaftkopf (3) ein drittes Loch (13) für die Aufnahme einer Sicherungskette vorgesehen ist, und wobei sich zumindest die Lochwände (14) für die Löcher (5, 6) zur Aufnahme des Federbügels (8) in Richtung zur Einstecköffnung (15, 16) für den Federbügel (8) zu erweitern und diese Lochwände (14) spanlos geformt sind, dadurch gekennzeichnet, daß zumindest eines der Löcher (5, 6) zur Aufnahme des Federbügels (8) ein Sackloch ist und daß am Grunde dieses Sackloches ein in Richtung zum Lochrand vorstehender Vorsprung (21), z. B. eine Spitze oder Bombierung, vorgesehen ist.

2. Klappstecker, der einen Schaft (1) und einen im Kopf (3) desselben schwenkbar gelagerten Federbügel (8) aufweist, zu dessen Lagerung zwei den Schaftkopf (3) durchsetzende Löcher (5, 6) mit geschlossenem Umfang im Schaftkopf vorgesehen sind, deren Lochachsen in Richtung der Schaftachse und quer dazu gegeneinander versetzt sind, so daß der Mittenbereich (7) des Federbügels (8) elastisch gegen den Schaft gedrückt wird, wobei gegebenenfalls im Schaftkopf (3) ein drittes Loch (13) für die Aufnahme einer Sicherungskette vorgesehen ist, und wobei sich zumindest die Lochwände (14) für die Löcher (5,6) zur Aufnahme des Federbügels (8) in Richtung zur Einstecköffnung (15, 16) für den Federbügel (8) zu erweitern und diese Lochwände (14) spanlos geformt sind, dadurch gekennzeichnet, daß sich beide Endabschnitte zumindest eines der Löcher (5, 6) zur Aufnahme des Federbügels (8) in Richtung zur Lochmündung erweitern, vorzugsweise konisch.

Klappstecker nach Anspruch 1 oder 2, dadurch

**0 154 110**

gekennzeichet, daß sich die Lochwände (14) mit einem Konuswinkel von 1 bis 25°, vorzugsweise 5 bis 10° erweitern.

4. Verfahren zur Herstellung eines Klappsteckers nach einem der Ansprüche 1 bis 3, dadurch gekennzeichnet, daß die sich erweiternden Lochwände (14) und gegebenenfalls auch der Lochboden (20) spanlos geformt werden, z. B. durch Schmieden im Gesenk, Drücken, Prägen oder Gießen in einer Form unter Verwendung eines Dornes.

5. Verfahren nach Anspruch 4, dadurch gekennzeichnet, daß die sich erweiternde Lochwand (14) jedes Loches zusammen mit dem zum Lochrand vorstehenden Vorsprung (21) in einem gemeinsamen Arbeitsgang spanlos geformt wird.

### Claims

1. Linch pin which has a shaft (1) and a spring clip (8) which is pivotably mounted in the head (3) of said shaft, for mounting which there are provided, in the shaft head, two apertures (5, 6) with a closed circumference, the axes of the aperture being offset with respect to each other in the direction of the shaft axis and transverse thereto, so that the centre area (7) of the spring clip (8) is pressed resiliently against the shaft, with possibly a third aperture (13) provided in the shaft head (3) for receiving a safety chain, and where at least the aperture walls (14) for the apertures (5, 6) for receiving the spring clip (8) widen in the direction of the insertion aperture (15, 16) for the spring clip (8) and these aperture walls (14) are shaped without cutting, characterised in that at least one of the apertures (5, 6) for receiving the spring clip (8) is a blind hole and in that at the bottom of this blind hole there is provided a projection (21), e.g. a point or a bulge projecting in the direction of the aperture edge.

2. Linch pin which has a shaft (1) and a spring clip (8) which is pivotably mounted in the head (3) of said shaft, for mounting which there are provided, in the shaft head, two apertures (5, 6) penetrating the shaft head (3) and with a closed circumference, the axes of the aperture being offset with respect to each other, in the direction of the shaft axis and transverse thereto, so that the centre area (7) of the spring clip (8) is pressed resiliently against the shaft, with possibly a third aperture (13) provided in the shaft head (3) for receiving a safety chain and where at least the aperture walls (14) for the apertures (5, 6) for receiving the spring clip (8) widen in the direction of the insertion aperture (15, 16) for the spring clip (8) and these aperture walls (14) are shaped without cutting, characterised in that both end sections of at least one of the apertures (5, 6) for receiving the spring clip (8) widen in the direction of the aperture mouth, preferably conically.

3. Linch pin according to claim 1 or 2, characterised in that the aperture walls (14) widen out with a cone angle of 1 to 15°, preferably 5 to 10°.

4. Process for the production of a linch pin according to one of claims 1 to 3, characterised in that the widening aperture walls (14) and also the aperture bottom (20), if applicable, are shaped without cutting, e.g. by drop forging, pressing, stamping or casting in a mould using a pin.

5. Process according to claim 4, characterised in that the widening aperture wall (14) of each aperture is shaped without cutting in a common operation together with the projection (21) projecting towards the aperture edge.

### Revendications

1. Esse d'essieu comprenant un fût (1) et un étrier élastique (8) qui est monté pivotant dans la tête (3) de ce fût, et pour le montage duquel sont prévus, dans la tête du fût, deux trous (5, 6) à pourtour fermé, dont les axes sont mutuellement décalés dans la direction de l'axe du fût et transversalement à cet axe, de telle sorte que la zone centrale (7) de l'étrier élastique (8) soit pressée élastiquement contre ce fût, un troisième trou (13) étant éventuellement prévu dans la tête (3) du fût pour recevoir une chaîne de sûreté, et au moins les parois (14) des trous (5, 6) destinés à recevoir l'étrier élastique (8) s'évasant en direction de l'ouverture (15, 16) d'emboîtement de cet étrier élastique (8), et ces parois (14) de trous étant ménagées sans enlèvement de copeaux, caractérisée par le fait qu'au moins l'un des trous (5, 6) destinés à recevoir l'étrier élastique (8) est un trou borgne; et par le fait qu'il est prévu, au fond de ce trou borgne, une protubérance (21) dépassant en direction du bord du trou, par exemple une pointe ou un bombement.

2. Esse d'essieu comprenant un fût (1) et un étrier élastique (8) qui est monté pivotant dans la tête (3) de ce fût, et pour le montage duquel sont prévus, dans la tête du fût, deux trous (5, 6) à pourtour fermé traversant la tête (3) du fût, dont les axes sont mutuellement décalés dans la direction de l'axe du fût et transversalement à cet axe, de telle sorte que la zone centrale (7) de l'étrier élastique (8) soit pressée élastiquement contre ce fût, un troisième trou (13) étant éventuellement prévu dans la tête (3) du fût pour recevoir une chaîne de sûreté, et au moins les parois (14) des trous (5, 6) destinés à recevoir l'étrier élastique (8) s'évasant en direction de l'ouverture (15, 16) d'emboîtement de cet étrier élastique (8), et ces parois (14) de trous étant ménagées sans enlèvement de copeaux, caractérisée par le fait que les deux régions extrêmes d'au moins l'un des trous (5, 6) destinés à recevoir l'étrier élastique (8) s'évasent, de préférence coniquement, en direction de l'embouchure du trou.

3. Esse d'essieu selon la revendication 1 ou 2,

5

caractérisée par le fait que les parois (14) des trous s'évasent selon un angle de conicité de 1 à 25°, de préférence de 5 à 10°.

4. Procédé pour fabriquer une esse d'essieu selon l'une des revendications 1 à 3, caractérisé par le fait que les parois s'évasant (14) des trous, et éventuellement aussi le fond (20) de ces trous, sont formés sans enlèvement de copeaux, par exemple par forgeage par estampage, par emboutissage, par matriçage, ou bien par coulée dans un moule en utilisant un poinçon.

5. Procédé selon la revendication 4, caractérisé par le fait que la paroi s'évasant (14) de chaque trou est formée sans enlèvement de copeaux, conjointement à la protubérance (21) dépassant vers le bord du trou, en une passe de travail commune.

0 154 110

FIG.1

FIG.2

FIG.3

FIG.4

FIG.5